# EUROPÄISCHE PATENTANMELDUNG

(11) **EP 1 881 311 A1**
(43) Veröffentlichungstag der Anmeldung: **23.01.2008**
(21) Anmeldenummer: 07005265.9
(22) Anmeldetag: 14.03.2007
(51) Int. Cl.: G01K 13/00, G01K 13/08

(54) **Vorrichtung zur Temperaturerfassung in Umgebungen mit starken elektromagnetischen Wechselfeldern und/oder an rotierenden Teilen**

(30) Priorität: 17.07.2006 DE 102006033318
(71) Anmelder: Ziehl industrie-elektronik GmbH + Co., 74523 Schwäb. Hall (DE)
(72) Erfinder: Ziehl, Uwe, 74523 Schwäbisch Hall (DE)
(74) Vertreter: Jeck, Anton

(57) **Zusammenfassung**

Die Erfindung betrifft eine Vorrichtung zur Temperaturmessung in einer Umgebung mit starken, elektromagnetischen Wechselfeldern und/oder bei rotierenden Teilen, welche
- einen Licht emittierenden Sender,
- eine Vorrichtung zur Umwandlung von Lichtwellen in elektrischen Strom,
- eine mit der Vorrichtung elektrisch verbundene und von dieser zumindest zeitweilig elektrisch versorgte Mess- und Sendevorrichtung, welche eine Temperatur über mindestens einen in einem zu überwachenden Messbereich angeordneten Temperaturfühler misst und Temperaturmesswerte, sendet, sowie
- einen Empfänger, der die Messwerte von der Mess- und Sendevorrichtung empfängt und auswertet,

umfasst.

## Beschreibung

Die Erfindung betrifft eine Vorrichtung zur Temperaturerfassung in Umgebungen mit starken elektromagnetischen Wechselfeldern und/oder an rotierenden Teilen, gemäß dem Oberbegriff des Anspruchs 1.

Transformatoren zur Umsetzung hoher elektrischer Leistungen sind hohen thermischen Beanspruchungen ausgesetzt. Um mögliche oder bereits eingetretene Schäden oder Störungen frühzeitig erkennen zu können, ist deshalb eine Temperaturüberwachung erforderlich. Da die zu überwachenden Transformatoren häufig dezentral aufgestellt sind, ist es erforderlich, dass die Temperaturüberwachung in Form einer Fernüberwachung erfolgen kann.

Hierzu leitet ein an einer zu überwachenden Komponente des Transformators angeordneter Temperatursensor, wie beispielsweise ein Öltemperatursensor, ein Gehäusetemperatursensor, ein Primär- oder Sekundärwicklungstemperatursensor, ein Kerntemperatursensor oder dergleichen, seine Messdaten kontinuierlich oder in diskreten Zeitschritten über eine Datenleitung oder über eine Funkstrecke an eine zentrale Überwachungsstelle weiter. Diese Datenweiterleitung erfordert einen im Temperatursensor integrierten Verstärker, der von außen mit elektrischem Strom versorgt werden muss.

Hierbei ergibt sich das Problem, dass aufgrund von Einstreuungen der typischerweise hohe Feldstärken aufweisenden, niederfrequenten elektromagnetischen Wechselfelder die Genauigkeit der Temperaturmessung bzw. der weitergeleiteten Daten hohen Schwankungen unterliegt.

Aus DE 19821773 C1 ist hierzu bekannt, einen Temperatursensor zu verwenden, der ein Ausgangssignal liefert, dessen Frequenz proportional zur Temperatur ist. Aus dem Ausgangssignal wird im Temperatursensor ein symmetrisches Signal erzeugt, welches über eine Datenleitung zu einer zentralen Überwachungsstelle weitergeleitet wird. Das symmetrische Signal erlaubt die Elimination von in die Datenleitung einstreuenden Störungen, hervorgerufen durch elektromagnetische Wechselfelder. Hierdurch können längere Datenleitungen verwendet werden.

Nachteilig hieran ist, dass Störungen, hervorgerufen durch Einstreuungen in die Stromversorgung des Temperatursensors nicht eliminiert werden können. Darüber hinaus ist der Schaltungsaufwand zur Erzeugung symmetrischer Signale sehr hoch.

Ebenso ist bekannt, aus einer Distanz Temperaturen berührungslos zu erfassen. Dies erfolgt beispielsweise durch Erfassung der von der Oberfläche eines Körpers emittierten infraroten Strahlung. Ein solches Verfahren ist beispielsweise aus DE 19642135 A1 bekannt.

Nachteilig hieran ist, dass sich insbesondere in geschlossenen Räumen, wie bei Transformatoren üblich, die Emissionen von wärmeren und kälteren Oberflächen überlagern. Zudem erlaubt ein solches Vorgehen nur die Erfassung von Oberflächentemperaturen, nicht aber beispielsweise die Erfassung der Öltemperatur in einem geschlossenen, möglicherweise durch andere Komponenten verdeckt angeordneten Ölkreislauf oder dergleichen.

Aus DE 3102334 A1 ist eine Temperatur-Fernmesseinrichtung bekannt, umfassend eine an oder in einem Gegenstand angeordnete elektromagnetisch abfragbare Marke. Die Marke weist einen elektromagnetisch-akustischen ersten Wandler, ein Laufstrecken-Verzögerungselement für akustische Oberflächenwellen, sowie einen akustisch-elektromagnetischen zweiten Wandler auf. Der erste Wandler wandelt ein im Radiofrequenz- oder Mikrowellenbereich drahtlos gesendetes elektromagnetisches Signal in eine akustische Oberflächenwelle um. Die Ausbreitungsgeschwindigkeit dieser Oberflächenwelle ist proportionale der zu messenden Temperatur. Der zweite Wandler empfängt die akustische Welle und erzeugt ein elektromagnetisches Signal, das zu einer zentralen Überwachungsstelle drahtlos übermittelt wird.

Nachteilig hieran ist, dass eine solche elektromagnetische Fernabfrage nur bei elektrisch nicht abschirmenden Gegenständen möglich ist. Transformatoren und deren Komponenten sind jedoch weitgehend aus elektromagnetisch abschirmendem Material hergestellt. Darüber hinaus kommt es durch die starken elektromagnetischen Wechselfelder in einem Transformator und in dessen Umgebung zu einer das Messergebnis störenden Überlagerung mit den verwendeten Radio- oder Mikrowellen für die Hin- und/oder Rückübertragung.

Eine ähnliche Messanordnung, allerdings unter Ausnutzung einer temperaturabhängigen Änderung der Impedanz eines elektrischen Schwingkreises anstelle einer temperaturabhängigen Änderung der Ausbreitungsgeschwindigkeit einer akustischen Oberflächenwelle, ist aus DE 10134432 A1 bekannt. Auch hier ergeben sich die oben genannten Nachteile einer Einstreuung der starken elektromagnetischen Wechselfelder eines Transformators in die auch zur Energieversorgung verwendeten, den Schwingkreis anregenden elektromagnetischen Wechselfelder.

Des Weiteren sind Verfahren zur Temperaturmessung bekannt, bei denen ein Temperatursensor mittels magnetischer Induktion mit elektrischem Strom versorgt wird. So ist beispielsweise aus DE 19924830 A1 bekannt, die Temperatur in einem Fahrzeugreifen derart zu messen. Auch solche Verfahren sind in einer Umgebung mit starken elektromagnetischen Wechselfeldern nicht anwendbar.

Aus DE 44 08 898 C2 ist eine Vorrichtung zur Temperaturmessung bekannt. Die Vorrichtung umfasst fernkalibrierbare, minitaturisierte Temperaturfühler, die in menschliche oder tierische Körper injiziert werden. Die elektrische Versorgung der Temperaturfühler sowie die Rücksendung von Messwerten an eine Auswerteeinheit finden dabei durch elektromagnetische Induktion statt.

Die Vorrichtung eignet sich somit nicht zur Verwendung in einer Umgebung mit starken elektromagnetischen Wechselfeldern.

Durch EP 1 486 763 A1 sind eine Vorrichtung und ein Verfahren zur Temperaturmessung des menschlichen Körpers bekannt. EP 0 743 510 A1 beschreibt eine Vorrichtung zur Temperaturmessung im tierischen Körper. Ein Temperaturfühler wird bei dabei durch elektromagnetische Induktion mit elektrischer Energie versorgt.

Die Vorrichtungen sowie das Verfahren eignen sich somit nicht zur Verwendung in einer Umgebung mit starken elektromagnetischen Wechselfeldern.

Durch die DE 44 35 602 C2 sind darüber hinaus ein Verfahren und eine Vorrichtung zur elektrischen Versorgung eines in den menschlichen Körper implantierten elektromedizinischen Mess-, Steuer- und Regelvorrichtung und zum bidirektionalen Datentransfer zwischen Mess-, Steuer- und Regelvorrichtung und einer außerhalb des menschlichen Körpers angeordneten Auswerteeinheit bekannt. Die elektrische Versorgung der Mess-, Steuer- und Regelvorrichtung erfolgt dabei über unter die Haut implantierte Solarzellen, die mit sichtbarem und/oder infrarotem Licht von einer auf der Haut angeordneten Lichtquelle bestrahlt werden. Der bidirektionale Datentransfer findet mit steuermoduliertem Licht mit Wellenlängen größer 800 nm statt. Hierzu sind sowohl auf, als auch unter der Haut angeordnete Lichtsender und -empfänger vorgesehen.

Die Vorrichtung und das Verfahren sind nicht zur Messung von Temperaturen in Umgebungen mit starken elektromagnetischen Wechselfeldern geeignet, da die Übertragungswege des Lichts sowohl zur Versorgung, als auch zum bidirektionalen Datentransfer lediglich die über der implantierten elektromedizinischen Mess-, Steuer- und Regelvorrichtung befindlichen Hautschichten über eine sehr kurze Strecke im Größenordnungsbereich von wenigen zehntel Millimetern überbrücken. Der bidirektionale Datentransfer erfolgt auf der verbleibenden Strecke zwischen Auswerteeinheit und auf der Haut angeordnetem Lichtsender und -empfänger mittels Lichtleitern oder Kabeln. Dadurch kommt es zur aus dem medizinischen Bereich bekannten Unverträglichkeit der bekannten Vorrichtung und des bekannten Verfahrens in Umgebungen mit starken elektromagnetischen Wechselfeldern.

Eine grundsätzlich ähnliche Problematik ist auch bei einer Temperaturerfassung an rotierenden Teilen bekannt.

Eine Aufgabe der Erfindung ist es deshalb, eine Vorrichtung zur Temperaturmessung zu schaffen, welche im Bereich starker elektromagnetischer Wechselfelder, wie etwa im Innenbereich eines Transformators anwendbar ist, und dabei eine genaue Temperaturmessung erlaubt, ohne dass die Hochspannungs-Wechselfelder einen Einfluss auf das Messergebnis haben. Vorzugsweise sollte eine solche Vorrichtung auch zur Temperaturmessung an rotierenden Teilen verwendet werden können.

### Offenbarung der Erfindung und deren Vorteile:

Die Aufgabe wird gelöst durch die Merkmale des Anspruchs 1.

Eine erfindungsgemäße Vorrichtung zur Temperaturmessung in einer Umgebung mit starken, zeitlich veränderlichen elektromagnetischen Wechselfeldern hoher Feldstärke, wie etwa in oder an Hochspannungs-Transformatoren, und/oder bei rotierenden Teilen, umfasst demzufolge
- einen Licht emittierenden Sender als Energiequelle für eine in der Umgebung mit starken elektromagnetischen Wechselfeldern hoher Feldstärke angeordnete Messvorrichtung,
- eine das von dem Sender emittierte Licht empfangende Vorrichtung zur Umwandlung von Lichtwellen in elektrischen Strom,
- eine mit der Vorrichtung zur Umwandlung von Lichtwellen in elektrischen Strom elektrisch verbundene und von dieser zumindest zeitweilig elektrisch versorgte Mess- und Sendevorrichtung, welche eine Temperatur über mindestens einen in einem zu überwachenden Messbereich angeordneten Temperaturfühler misst und Temperaturmesswerte, beispielsweise in Form eines der Temperatur proportionalen oder anderswie eindeutig zugeordneten Messsignals sendet, sowie
- einen Empfänger, der die Temperaturmesswerte von der Mess- und Sendevorrichtung empfängt und vorzugsweise auswertet.

Erfindungsgemäß wird ausgenutzt, dass elektromagnetische Wechselfelder von Hochspannungs-Transformatoren typischerweise niederfrequent sind. Niederfrequente elektromagnetische Wechselfelder streuen umso stärker in elektrische Verbindungsleitungen beispielsweise zur Energieversorgung oder zur Datenübertragung ein, je länger diese sind. Deshalb sind bei der erfindungsgemäßen Vorrichtung vorzugsweise nur zwischen der Vorrichtung zur Umwandlung von Lichtwellen in elektrischen Strom, der Mess- und Sendevorrichtung, sowie dem Temperaturfühler so kurz wie möglich ausgelegte Verbindungsleitungen vorgesehen. Besonders vorzugsweise sind zumindest die Vorrichtung zur Umwandlung von Lichtwellen in elektrischen Strom und die Mess- und Sendevorrichtung als eine Baugruppe ausgeführt, die dann beispielsweise durch ein gemeinsames Gehäuse elektromagnetisch abschirmbar sein kann.

Vorzugsweise erfolgt eine Übertragung sowohl der für einen Betrieb der erfindungsgemäßen Vorrichtung zur Temperaturmessung benötigten Energie, als auch der Messwerte drahtlos. Um insbesondere Einstreuungen der elektromagnetischen Wechselfelder in die Energieversorgung auszuschließen, erfolgt die Energieversorgung mittels Licht. Vorrichtungen zur Umwandlung von Licht in elektrischen Strom sind auf eine so hohe Anregungsfrequenz ausgelegt, dass niederfrequente Störungen keinen Einfluss nehmen können. Einstreuungen in die vorzugsweise drahtlose Übertragung der Messwerte und daraus resultierende Fehler können einerseits durch eine geeignete digitale Codierung und andererseits durch eine Kenntnis der Frequenz der niederfrequenten elektromagnetischen Wechselfelder mit überschaubarem Aufwand eliminiert werden. Darüber hinaus ist denkbar, auch die drahtlose Übertragung der Messwerte mittels Licht vorzunehmen. Somit haben niederfrequente elektromagnetische Wechselfelder auch hierauf keinen Einfluss.

Zudem ist-erfindungsgemäß vorgesehen, Temperaturfühler und Vorrichtung zur Umwandlung von Lichtwellen in elektrischen Strom, im Folgenden auch als photovoltaischer Wandler bezeichnet, voneinander beabstandet anordnen zu können. Hierdurch kann der Temperaturfühler in Bereichen angeordnet werden, wohin keine Übertragung von Licht oder anderen, hochfrequenten elektromagnetischen Wellen möglich ist. Die Erfindung erlaubt somit auch Temperaturmessungen in elektromagnetisch abgeschirmten Umgebungen, wie etwa im Inneren eines Transformators.

Die elektrische Verbindung zwischen photovoltaischem Wandler und Temperaturfühler ist dabei sehr kurz auslegbar, so dass hier ein nur geringer Einfluss niederfrequenter elektromagnetischer Wechselfelder auftritt. Das Selbe gilt für die elektrische Verbindung zwischen Temperaturfühler und Mess- und Sendevorrichtung. Generell gilt dabei, je höher die Frequenz eines elektromagnetischen Wechselfelds ist, desto kürzer ist die zum Auftreten von Resonanz erforderliche Länge einer elektrischen Verbindungsleitung. Werden umgekehrt die elektrischen Verbindungsleitungen zwischen photovoltaischem Wandler und Temperaturfühler, sowie zwischen Temperaturfühler und Mess- und Sendevorrichtung kurz ausgeführt, haben die niederfrequenten elektromagnetischen Wechselfelder eines Hochspannungs-Transformators einen nur geringen Einfluss auf die Gleichmäßigkeit der Stromversorgung. Aus diesem Grund spielen kurze Verbindungsleitungen eine nur untergeordnete Rolle.

Selbstverständlich ist auch denkbar, dass der Temperaturfühler über die Mess- und Sendevorrichtung mit elektrischem Strom versorgt wird, so dass keine separate Verbindungsleitung zwischen photovoltaischem Wandler und Temperaturfühler vonnöten ist.

Eine vorteilhafte Ausgestaltung der Erfindung sieht vor, dass die Messwerte impulsartig und vorzugsweise in regelmäßigen Zeitabständen gesendet werden. Grundsätzlich ist auch denkbar, dass eine Übertragung der Messwerte nur bei Überschreitung eines bestimmten Temperatur-Schwellenwerts erfolgt. Dabei ist denkbar, die Mess-und Sendevorrichtung eine Speichervorrichtung zur Zwischenspeicherung von Messwerten bis zu deren Übertragung an den Empfänger umfasst. Dadurch können die Messwerte quasi kontinuierlich erfasst werden und dennoch eine Übertragung der Messwerte zum Empfänger diskontinuierlich erfolgen.

Eine andere vorteilhafte Ausgestaltung der Erfindung sieht vor, dass eine Energieversorgung der Mess- und Sendevorrichtung mittels des Lichts emittierenden Senders impulsartig und vorzugsweise in regelmäßigen Zeitabständen erfolgt. Hierdurch kann die Mess- und Sendevorrichtung gezielt angesprochen werden, um eine Temperaturmessung durchzuführen.

Vorzugsweise umfasst die Mess- und Sendevorrichtung die Vorrichtung zur Umwandlung von Licht in elektrischen Strom. Hierdurch entfallen die elektrischen Verbindungsleitungen zwischen Mess- und Sendevorrichtung und Vorrichtung zur Umwandlung von Licht in elektrischen Strom. Dadurch werden Einstreuungen der niederfrequenten elektromagnetischen Wechselfelder in die elektrische Energieversorgung vermieden.

Gemäß einer vorteilhaften Ausgestaltung der Erfindung ist vorgesehen, dass der Licht emittierende Sender fokussiertes Licht entsendet, welches auf die Vorrichtung zur Umwandlung von Licht in elektrischen Strom gerichtet ist. Hierdurch ist es möglich, eine Mess- und Sendevorrichtung, beispielsweise durch impulsartiges Aussenden fokussierten Lichts, gezielt anzusprechen, beispielsweise um kontinuierlich mit ein und dem selben Empfänger mehrere Temperaturwerte, die von mehreren Mess-und Sendevorrichtung erfasst werden, abzufragen. Dadurch kann beispielsweise auf eine den einzelnen Mess- und Sendevorrichtung zugeordnete Codierung verzichtet werden.

Dabei ist vorzugsweise vorgesehen, dass der Licht emittierende Sender eine Laserlichtquelle umfasst. Laserlicht lässt sich sehr einfach fokussieren und darüber hinaus auch sehr einfach impulsartig takten. Außerdem weist Laserlicht eine sehr hohe Energiedichte auf, die beispielsweise eine sehr kompakte Auslegung der Vorrichtung zur Umwandlung von Licht in elektrischen Strom erlaubt. Zudem entsendet eine Laserlichtquelle typischerweise monochromates Licht oder zumindest Licht in einem stark begrenzten Spektrum. Dadurch kann die Vorrichtung zur Umwandlung von Licht in elektrischen Strom auf diese Wellenlänge ausgelegt werden, was einen hohen Wirkungsgrad und damit kleine Abmessungen ermöglicht. Der Begriff Licht umfasst hierbei elektromagnetische Wellen mit einer Wellenlänge kürzer als 800 nm.

Eine zusätzliche vorteilhafte Ausgestaltung der Erfindung sieht vor, dass die elektrische Verbindung zwischen Vorrichtung zur Umwandlung von Licht in elektrischen Strom und Mess- und Sendevorrichtung und/oder die elektrische Verbindung zwischen Temperaturfühler und Mess- und Sendevorrichtung eine Länge von höchstens 10 cm aufweist. Hierdurch werden Einstreuungen niederfrequenter elektromagnetischer Hochspannungs-Wechselfelder, die im Bereich von Transformatoren typischerweise im Bereich von 50 - 60 Hz liegen, wirkungsvoll unterdrückt.

Eine besonders vorteilhafte Ausgestaltung der Erfindung sieht vor, dass die Übertragung der Messwerte von der Mess- und Sendevorrichtung zu dem Empfänger ebenfalls drahtlos erfolgt. Hierdurch kann mittels der erfindungsgemäßen Vorrichtung ohne großen Installationsaufwand fast überall eine Temperaturmessung durchgeführt werden.

Grundsätzlich ist denkbar, dass die Übertragung der Messwerte von der Mess- und Sendevorrichtung zu dem Empfänger ebenfalls mittels Licht erfolgt. Eine weitere Übertragung der Messwerte beispielsweise zu einer zentralen Überwachungsstelle kann wiederum über eine Verbindungsleitung oder über eine Funkstrecke erfolgen.

Vorzugsweise finden dabei die Energieversorgung sowie die Übertragung der Messwerte mit unterschiedlichen Wellenlängen statt.

Die Erfindung wird nun anhand von Ausführungsbeispielen näher erläutert. Es zeigt:

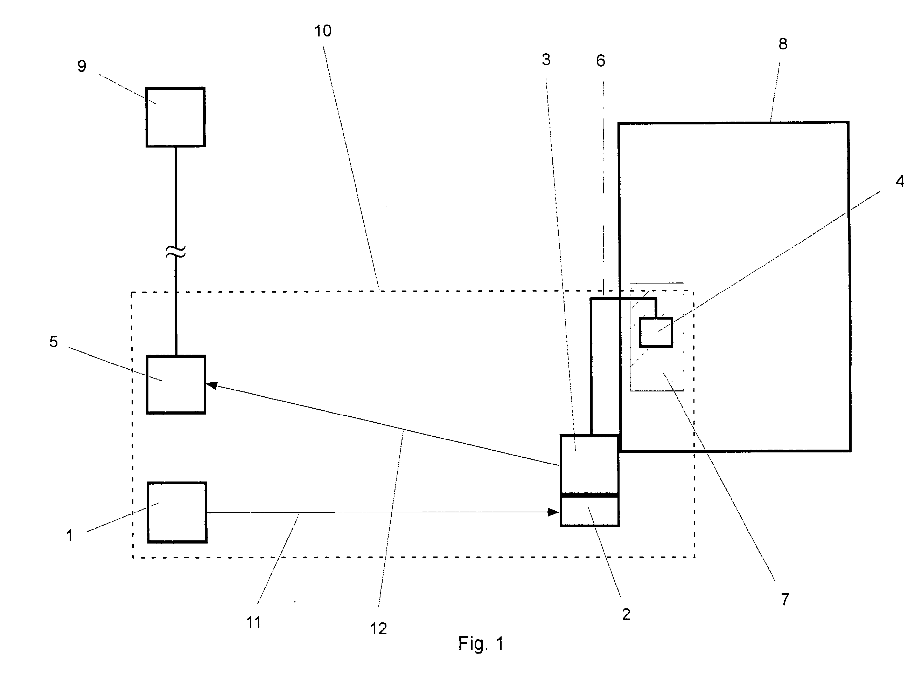

- Fig. 1: eine schematische Darstellung des Aufbaus und der Anordnung einer erfindungsgemäßen Vorrichtung zur Temperaturmessung an einem Transformator.

Eine in Fig. 1 dargestellte Vorrichtung 10 zur Temperaturmessung in einer Umgebung mit starken, elektromagnetischen Wechseifeldern und/oder bei rotierenden Teilen umfasst im Wesentlichen einen Licht emittierenden Sender 1, eine Vorrichtung 2 zur Umwandlung von Lichtwellen 11 in elektrischen Strom, eine Mess- und Sendevorrichtung 3, einen Temperaturfühler 4, sowie einen Empfänger 5.

Die Mess- und Sendevorrichtung 3 ist mit der Vorrichtung 2 zur Umwandlung von Lichtwellen 11 in elektrischen Strom elektrisch verbunden und wird von dieser zumindest zeitweilig elektrisch versorgt. Die Mess- und Sendevorrichtung 3 misst eine Temperatur über den in einem zu überwachenden Messbereich 7 angeordneten Temperaturfühler 4. Der Messbereich 7 liegt im Inneren eines Transformators 8. Um den Temperaturfühler 4 im Messbereich 7 anordnen zu können, und dennoch die Mess- und Sendevorrichtung mittels Lichtwellen 11 mit Energie versorgen zu können, sind Mess- und Sendevorrichtung 3 und Temperaturfühler nicht am Selben Ort angeordnet, sondern über eine kurze elektrische Verbindungsleitung 6 miteinander verbunden. Die elektrische Verbindungsleitung 6 zwischen Temperaturfühler 4 und Mess- und Sendevorrichtung 3 weist eine Länge von höchstens 10 cm auf. Die elektrische Verbindungsleitung 6 führt dabei durch eine elektromagnetische Wellen abschirmende Wandung des Transformators 8. Die elektrische Verbindungsleitung 6 dient sowohl der elektrischen Energieversorgung des Temperaturfühlers 4, als auch der Übertragung eines der gemessenen Temperatur proportionalen Signals vom Temperaturfühler zur Mess- und Sendevorrichtung 3. Dabei ist unerheblich, ob das vom Temperatursensor 4 ausgegebene Signal als Messwert verwendet werden kann, oder ob erst eine geeignete Umwandlung oder Zuordnung in der Mess- und Sendevorrichtung 3 erfolgt.

Die Mess- und Sendevorrichtung 3 sendet die gemessenen Temperaturwerte an den Empfänger 5. Die Messwerte werden von der Mess- und Sendevorrichtung 3 in Form von hochfrequenten elektromagnetischen Wellen 12, beispielsweise Lichtwellen, an den Empfänger 5 übertragen.

Der Empfänger 5 empfängt die Messwerte von der Mess- und Sendevorrichtung 3 und wertet diese vorzugsweise auch aus. Die empfangenen Messwerte oder die ausgewerteten Messwerte werden an eine entfernte zentrale Überwachungsstelle 9 weitergeleitet. Dies kann über eine Verbindungsleitung oder drahtlos erfolgen, da diese Verbindungsleitung bzw. Funkstrecke ausreichend entfernt von der durch den Transformator 8 mit starken elektromagnetischen Wechselfeldern beeinflussten Umgebung ist. Grundsätzlich ist dabei auch denkbar, dass eine Auswertung der Messwerte erst in der zentralen Überwachungsstelle 9 erfolgt.

Die Messwerte können impulsartig und vorzugsweise in regelmäßigen Zeitabständen von der Mess- und Sendevorrichtung 3 an den Empfänger 5 gesendet werden. Die Mess- und Sendevorrichtung 3 weist hierzu eine Speichervorrichtung zur Zwischenspeicherung von Messwerten bis zu deren Übertragung an den Empfänger 5 auf.

Der Licht emittierende Sender 1 entsendet fokussierte Lichtwellen 11, welche auf die Vorrichtung 2 zur Umwandlung von Licht in elektrischen Strom gerichtet sind. Die Vorrichtung 2 zur Umwandlung von Licht in elektrischen Strom umfasst eine auf die Wellenlänge der Lichtwellen 11 optimierten photovoltaischen Wandler, beispielsweise eine Gallium-Arsenid-Photozelle. Der Licht emittierende Sender 1 ist dabei vorzugsweise als Laserlichtquelle ausgeführt.

Wichtig ist hervorzuheben, dass die erfindungsgemäße Vorrichtung nicht nur auf eine Anwendung an oder in Transformatoren oder in deren Umgebung beschränkt ist, sondern grundsätzlich überall, insbesondere auch an rotierenden Teilen, wie beispielsweise Getrieben, elektrischen Antrieben oder Verbrennungsmaschinen anwendbar ist.

Ebenfalls wichtig ist hervorzuheben, dass anstelle elektrischer Verbindungsleitungen zwischen Vorrichtung zur Umwandlung von Lichtwellen in elektrischen Strom, Mess-und Sendevorrichtung und Temperaturfühler auch Lichtwellenleiter verwendbar sind. Zur Energieversorgung ist dabei in der jeweils mit elektrischer Energie zu versorgenden Einheit ein photovoltaischer Wandler vorgesehen. In der jeweils über einen Lichtwellenleiter eine zu versorgende Einheit mit Energie versorgenden Einheit ist dann außerdem eine Lichtquelle, vorzugsweise eine Laserlichtquelle, insbesondere ein Laserdiode angeordnet. Zur parallelen Datenübertragung ist denkbar, entweder das Licht zu modulieren und/oder eigene Frequenzen bzw. Wellenlängen für die Energieversorgung und die Datenübertragung zu verwenden, und/oder getrennte Lichtwellenleiter für die Energieversorgung und die Datenübertragung vorzusehen.

Grundsätzlich liegt es auch im Rahmen der Erfindung, dass die Übertragung des Lichts zur Energieversorgung zwischen Licht emittierendem Sender und der Vorrichtung zur Umwandlung von Lichtwellen in elektrischen Strom und/oder dass die Übertragung der Messwerte von der Mess- und Sendevorrichtung zum Empfänger durch einen, oder durch einen gemeinsamen, oder durch getrennte Lichtwellenleiter erfolgt.

Die Erfindung ist insbesondere im Bereich der Herstellung und des Betriebs von Transformatoren, sowie im Bereich der Herstellung von Vorrichtungen zur Temperaturüberwachung von Transformatoren und/oder rotierenden Teilen, sowie deren Betrieb gewerblich anwendbar.

### Bezugszahlenliste

- 1: Licht emittierender Sender
- 2: Vorrichtung zur
- 3: Mess- und Sendevorrichtung
- 4: Temperaturfühler
- 5: Empfänger

## Patentansprüche

1. Vorrichtung (10) zur Temperaturmessung in einer Umgebung mit starken, elektromagnetischen Wechselfeldern und/oder bei rotierenden Teilen,
**gekennzeichnet durch**
- einen Licht (11) emittierenden Sender (1),
- eine Vorrichtung (2) zur Umwandlung von Lichtwellen (11) in elektrischen Strom,
- eine mit der Vorrichtung (2) zur Umwandlung von Lichtwellen (11) in elektrischen Strom und mit dem Temperaturfühler (4) elektrisch verbundene und von dieser zumindest zeitweilig elektrisch versorgte Mess- und Sendevorrichtung (3), welche eine Temperatur mittels mindestens einem in einem zu überwachenden Messbereich (7) angeordneten Temperaturfühler (4) misst und Messwerte sendet, sowie
- einen Empfänger (5), der die Messwerte von der Mess- und Sendevorrichtung empfängt und auswertet.

2. Vorrichtung nach Anspruch 1,
**dadurch gekennzeichnet,**
**dass** die Messwerte impulsartig und vorzugsweise in regelmäßigen Zeitabständen gesendet werden.

3. Vorrichtung nach Anspruch 2,
**dadurch gekennzeichnet,**
**dass** die Mess- und Sendevorrichtung (3) eine Speichervorrichtung zur Zwischenspeicherung von Messwerten bis zu deren Übertragung an den Empfänger (5) umfasst.

4. Vorrichtung nach Anspruch 1 oder 2,
**dadurch gekennzeichnet,**
**dass** eine Energieversorgung der Mess- und Sendevorrichtung (3) mittels des Lichts (11) emittierenden Senders (1) impulsartig und vorzugsweise in regelmäßigen Zeitabständen erfolgt.

5. Vorrichtung nach einem der vorhergehenden Ansprüche,
**dadurch gekennzeichnet,**
**dass** die Mess- und Sendevorrichtung (3) die Vorrichtung (2) zur Umwandlung von Licht (11) in elektrischen Strom umfasst.

6. Vorrichtung nach einem der vorhergehenden Ansprüche,
**dadurch gekennzeichnet,**
**dass** der Licht (11) emittierende Sender (1) fokussiertes Licht entsendet, welches auf die Vorrichtung (2) zur Umwandlung von Licht (11) in elektrischen Strom gerichtet ist.

7. Vorrichtung nach Anspruch 6,
**dadurch gekennzeichnet,**
**dass** der Licht (11) emittierende Sender (1) eine Laserlichtquelle umfasst.

8. Vorrichtung nach einem der vorhergehenden Ansprüche,
**dadurch gekennzeichnet,**
**dass** die elektrische Verbindung zwischen Vorrichtung zur Umwandlung von Licht in elektrischen Strom (2) und Mess- und Sendevorrichtung (3) und/oder die elektrische Verbindung (6) zwischen Temperaturfühler (4) und Mess- und Sendevorrichtung (3) eine Länge von höchstens 10 cm aufweist.

9. Vorrichtung nach einem der vorhergehenden Ansprüche,
**dadurch gekennzeichnet,**
**dass** die Übertragung der Messwerte von der Mess- und Sendevorrichtung (3) zu dem Empfänger (5) ebenfalls drahtlos (12) erfolgt.

10. Vorrichtung nach Anspruch 9,
**dadurch gekennzeichnet,**
**dass** die Übertragung der Messwerte von der Mess- und Sendevorrichtung (3) zu dem Empfänger (5) ebenfalls mittels Licht erfolgt.
